# FASCICULE DE BREVET EUROPEEN

(11) **EP 1 825 744 B1**
(45) Date de publication et mention de la délivrance du brevet: **16.05.2012**
(21) Numéro de dépôt: 07290239.8
(22) Date de dépôt: 23.02.2007
(51) Int. Cl.: A01G 3/04

(54) **Machine de coupe utilisable notamment en agriculture, arboriculture et viticulture**
Schneidapparat zur Verwendung insbesondere in der Landwirtschaft, im Obstanbau und im Weinbau
Cutting machine used mainly in agriculture, arboriculture and viticulture

(30) Priorité: 24.02.2006 FR 0601665
(43) Date de publication de la demande: 29.08.2007
(73) Titulaire: Andelfinger, Didier, 68000 Colmar (FR)
(72) Inventeur: Andelfinger, Didier, 68000 Colmar (FR)
(74) Mandataire: Laget, Jean-Loup

(56) Documents cités:
- EP-A- 1 541 009
- EP-A1- 0 312 126
- DE-A1- 19 604 008
- FR-A- 2 723 509

## Description

La présente invention porte sur une machine de coupe utilisable en viticulture, arboriculture et viticulture notamment pour la taille ou la prétaille de vignes et/ou d'arbrisseaux.

Toutes les machines de coupe de ce type doivent répondre à de nombreux critères tels que :
- respect des fils de palissage, même détendus ;
- confort d'utilisation, fiabilité et sécurité d'emploi ;
- régularité de l'alimentation ;
- extraction des sarments coupés et restés accrochés aux fils de palissage par leurs vrilles ;
- qualité de coupe ;
- rendement de la machine.

Les solutions pour résoudre, ces critères sont à concilier avec une réduction du coût de la machine grâce à une construction rationnelle et aux concepts de base régissant le fonctionnement de la machine.

Le brevet EP 0,147,344, PELLENC, divulgue une machine de coupe avec deux ensembles de coupe identiques comportant chacun un empilage d'outils de coupe travaillant chacun par cisaillement. L'outil de coupe comprend deux éléments. L'élément extérieur, appelé cage, est formé d'un disque à denture périphérique et à nervures radiales ; il est soumis à un entraînement continu en rotation à une vitesse correspondant à l'avancement de la machine et rempli la fonction de contre-lame. L'élément intérieur est un arc de cercle fixe, comportant une dizaine de dents constituant des lames.

Les inconvénients de cette machine sont multiples :
- la fragilité des outils de coupe comparables à un sécateur ;
- la dégradation de la qualité de coupe du fait du jeu qui s'établit entre les lames et contre-lames ;
- les fils de palissage fréquemment sectionnés quand la vitesse du disque à denture périphérique n'est pas adaptée à la vitesse d'avancement ;
- fabrication onéreuse ;
- poids élevé ;
- rendement limité.

Dans le brevet EP 0 696 416 BINGER FRANCE, on a décrit une machine de coupe avec deux éléments de coupe identiques. Chaque élément de coupe comporte un empilage de cages dans lesquelles sont logées des scies circulaires tournant à grande vitesse (1.800 à 2.000 t/m). Les cages doivent, là aussi, tourner à une vitesse tangentielle correspondante à l'avancement, c'est-à-dire de l'ordre de 15 à 18 t/mn par km/h. Quatre moteurs sont nécessaires pour animer cette machine : un moteur pour chaque élément devant entraîner les scies, un autre pour chaque élément entraînant les cages. Cette machine, bien que moins fragile et plus performante que la machine PELLENC présente les inconvénients suivants :
- énergie hydraulique importante ;
- prix de revient élevé ;
- poids élevé.

D'autres machines existent avec deux éléments de coupe dont chaque élément est composé d'un empilage de scies ou de disques à la périphérie desquels sont agencés des couteaux amovibles. Outre le caractère dangereux propre à ces machines, le respect des fils de palissage n'est pas assuré.

Dans le brevet EP 1,541,009 au nom de VBC on a proposé une machine comportant deux éléments de coupe. Chaque élément de coupe est constitué d'un empilage de disques crénelés présentant à leur périphérie une denture d'un profil incurvé particulier. Les disques d'un ensemble peuvent interpénétrer dans des espaces aménagés entre les disques de l'autre ensemble. L'ouverture des ensembles est actionnée au moyen d'un vérin commandé par l'opérateur.

Les inconvénients dont cette machine est affectée sont multiples :
- l'écartement entre les disques d'un ensemble par rapport aux disques de l'autre ensemble est important pour éviter leur contact, ce qui entraîne une mauvaise qualité de coupe des coursons
- la vitesse de rotation des outils de coupe, obligatoirement importante pour empêcher le pincement des sarments entre les disques, est source de projections violentes de sarments ;
- de part la faible épaisseur des disques de coupe, la modification de hauteur de la machine au travail, soit par l'opérateur, soit par la configuration du sol, permet au fil de venir se loger au fond d'une cavité entre deux dents en appui d'un côté sur l'une des faces du disque et de l'autre côté, sur l'autre face du disque causant inévitablement son sectionnement ;
- lorsque les fils sont détendus, la pénétration d'un fil entre deux dents d'un disque est plus aisée, ce qui entraîne son sectionnement comme dans le cas précédent;
- la détérioration d'une seule dent d'un disque impose le démontage d'un module de coupe et le remplacement dudit disque ;
- les dents affûtées à leur périphérie causent de gros dommages aux piquets quand l'opérateur ouvre trop tôt ou ferme trop tard les éléments de coupe lors du passage d'un piquet ;
- l'arc de cercle décrit par la périphérie des dents est trop important et limite la pénétration des sarments, donc le rendement.

Le but de la présente invention est d'apporter des solutions efficaces aux problèmes exposés et d'écarter les inconvénients que présentent les machines de l'art antérieur.

La machine de coupe selon la présente invention est du type comportant deux ensembles d'outils coupants identiques comportant chacun un empilage d'outils de coupe, ces deux ensembles pouvant occuper une position de travail dans laquelle ils s'interpénètrent et une position écartée, pour laisser un passage aux piquets ; caractérisé par le fait que chaque outil de coupe est constitué d'un disque porteur à denture périphérique ayant une épaisseur d'au moins 3 mm, et portant à sa périphérie une couronne dentée à bords tranchants de profil correspondant, ces outils de coupe étant empilés les uns sur les autres de façon à constituer un ensemble et étant en position inverse d'un ensemble à l'autre.

La machine de coupe selon l'invention comporte en outre tout ou partie des dispositions suivantes :
a- le disque porteur à denture périphérique est en alliage d'aluminium ; tandis que la couronne dentée à bords tranchants est en acier à haute résistance ;
b- le profil de la couronne de dents tranchantes correspond exactement à celui du disque porteur, le bord extérieur de chaque dent tranchante en acier étant dans le prolongement de la dent correspondante du disque porteur ;
c- le profil des dents tranchantes de la couronne de dents tranchante déborde de 1 à 6 mm de celui des dents du disque porteur, le rebord de ces dents tranchantes pouvant éventuellement être aiguisé.
d- les paires d'outils de coupe se faisant face sont espacées les unes des autres d'un espace « e » définissant la longueur des morceaux de sarments découpés.

A titre d'exemple, on a représenté aux dessins annexés, des formes d'exécution de la machine de coupe, selon l'invention.
- la figure 1 représente une vue du dessus de la machine, modules de coupe écartés ;
- la figure 2 représente une vue du dessus de la machine, modules de coupe en position de travail ;
- la figure 3 représente les deux modules de coupe en élévation ;
- la figure 4 représente un ensemble disque porteur et sa couronne vu de dessous ;
- la figure 5 représente l'ensemble de la figure 4 vue de dessus
- la figure 6 représente une variante de réalisation de l'ensemble disque porteur/couronne vu de dessous ;
- la figure 7 représente l'ensemble de la figure 6 vu de dessus ;
- la figure 8 représente les deux modules de coupe en position rapprochée ou de travail ;
- la figure 9 représente en perspective, deux empilages d'ensembles de coupe l'un à bords francs l'autre à bords débordants ;
- la figure 10 est une vue en plan partielle d'un demi disque porteur ;
- la figure 11 est une demi coupe selon une ligne xx de la figure 10 ;
- la figure 12 est une vue de dessous, en perspective, illustrant le dispositif selon l'invention, dont l'un des empilages (B) est muni d'un organe de coupe additionnel ;
- la figure 13 est une variante illustrant le moyen de support, réglable en hauteur, des empilages ;
- la figure 14 est un détail de la figure 13 ;
- la figure 15 est un autre détail de la figure 13 ;
- la figure 16 représente en détail l'organe de coupe additionnel de la figure 12 vu de dessus, en perspective ;
- la figure 17 illustre une variante selon laquelle les deux empilages sont munis d'organe de coupe additionnel.

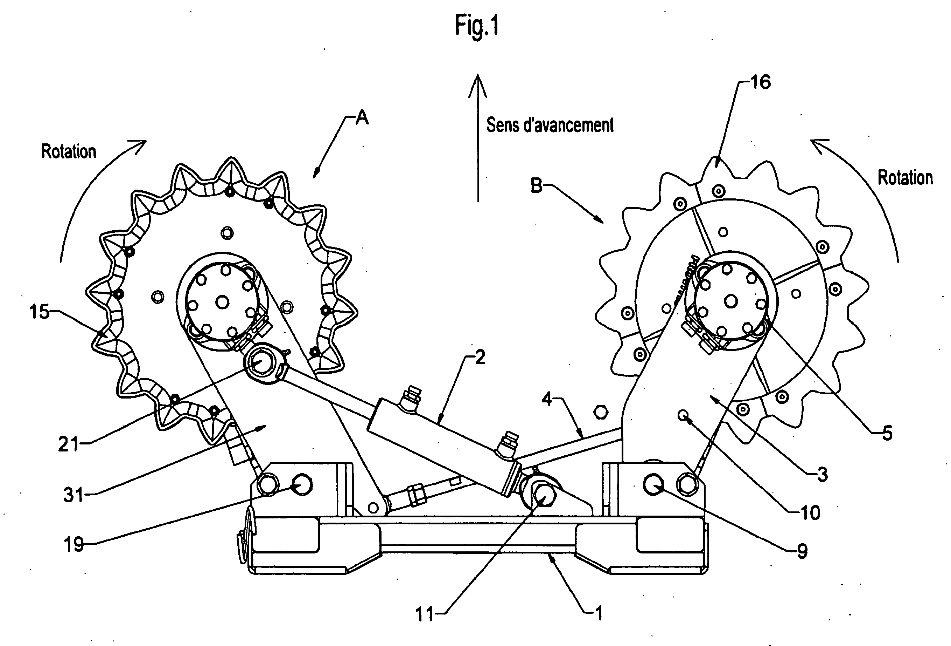

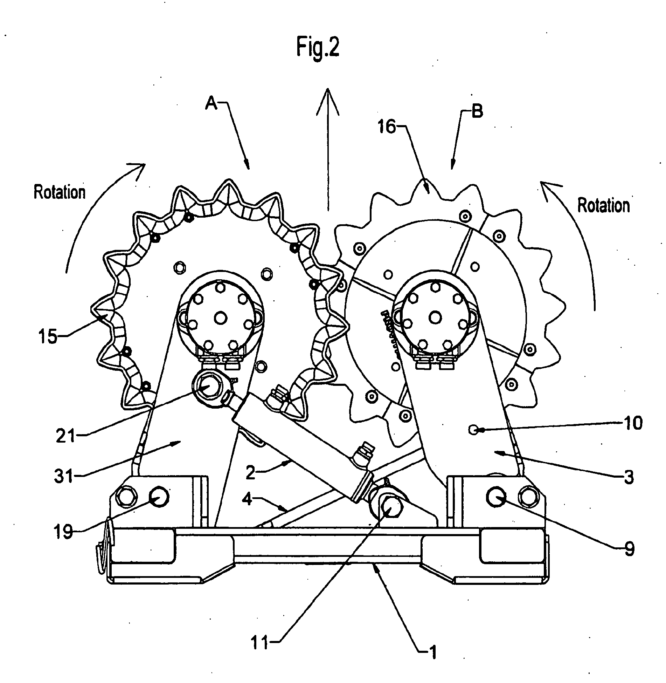

Les figures 1 et 2 représentent les deux ensembles d'outils de coupe A et B vus de dessus ; sur la figure 2, ces deux ensembles sont en position de travail, position dans laquelle ils s'interpénètrent ; sur la figure 1, ces deux ensembles sont en position écartée, position permettant le passage entre eux d'obstacles tels que des piquets de vigne.

L'ensemble B est porté par un bras 3, monté à pivotement sur un axe 9 porté par le châssis 1 de la machine, ce châssis étant porté par un tracteur (non représenté).

De façon analogue, l'ensemble A est porté par un bras 31, monté à pivotement sur un axe 19 porté par ledit châssis 1.

Les pivotements du bras 31 sont commandés par un vérin 2, monté de façon articulée sur le châssis 1 par l'axe 11 et sur le bras 31 par l'axe 21.

Les deux ensembles A et B sont reliés l'un à l'autre par une bielle 4, articulée sur les bras 3 et 31 par des axes 10 (l'axe 10 sur le bras 31 étant caché).

Lorsque le vérin 2 s'allonge, les deux bras 3 et 31 s'écartent l'un de l'autre (figure 1), lorsque le vérin 2 se raccourcit, les deux bras 3 et 31 se rapprochent, les organes de coupe s'interpénétrant (figure 2).

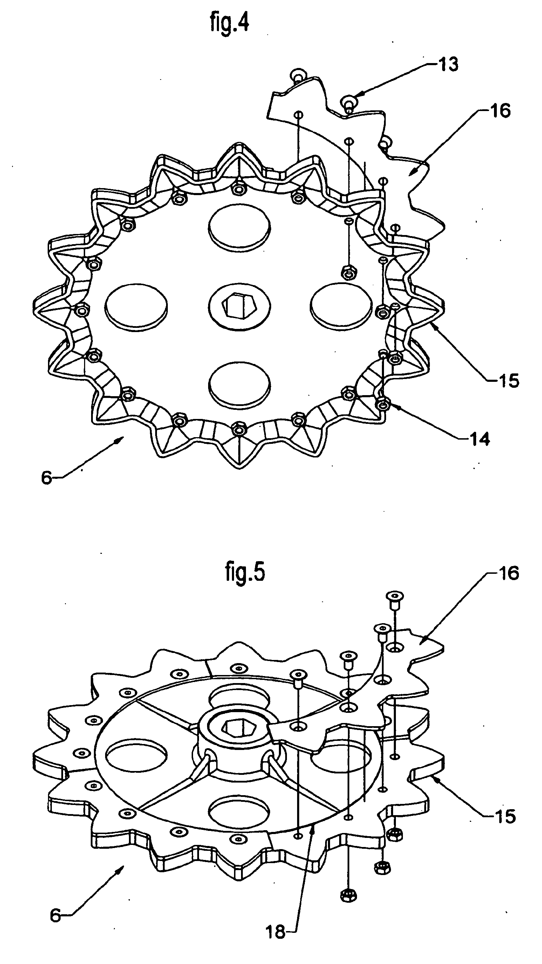

Les figures 4 et 5 montrent que chaque organe de coupe 6 est constitué par l'assemblage d'un disque porteur 15, relativement épais et d'éléments tranchants 16 qui sont fixés sur le pourtour de la face supérieure du disque porteur 15.

Dans l'exemple représenté, il y a quatre éléments 16 qui s'étendent chacun sur un arc de cercle de 90° ; de sorte que les quatre éléments constituent une couronne circulaire.

Cependant l'invention n'est pas limitée au cas où la couronne est en quatre éléments ; elle peut être constituée d'un seul élément, de deux éléments s'étendant chacun sur 180° ou encore de plusieurs fractions de cercle.

Dans l'exemple représenté, le disque porteur 15 comporte seize dents et la couronne 16 d'éléments tranchants comportant le même nombre de dents. Aux figures 4 et 5 on voit que les dents des éléments tranchants 16 ont exactement le même profil que les dents du disque porteur 15 ; de sorte que leurs rebords tranchants sont exactement dans l'alignement des parois des dents du disque porteur 15, mais l'invention n'est pas limitée à ce mode particulier de réalisation.

De même l'invention n'est pas limitée au mode de réalisation représenté aux figures qui n'est donné qu'à titre d'exemple ; le nombre de dents peut être compris entre 14 et 20.

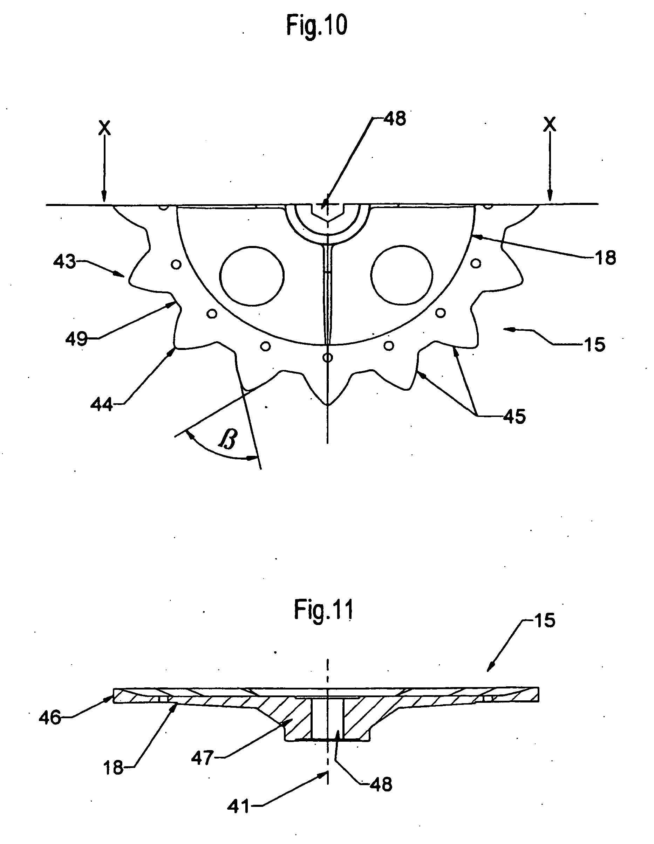

Sur la figure 10 on voit que les dents 43 du disque porteur 15 ont un profil analogue à celui d'un engrenage. Chacune comporte deux flancs 45 légèrement courbes, le sommet 44 est légèrement arrondi, et il y a un espace 49 séparant deux dents 43. l'angle β que font entre eux les deux flancs 45 est inférieur à 90° (avantageusement de l'ordre de 80°).

L'épaisseur des dents du disque porteur (référence 46 sur la figure 11) est relativement importante et les bords sont parallèles à l'axe de rotation 7.

De préférence, comme dans l'exemple représenté, l'épaisseur 46 peut être comprise entre 3 et 30 mm, de préférence 15 mm, alors que l'épaisseur des éléments tranchants 16 est de l'ordre de 4 mm.

C'est l'épaisseur totale des organes de coupe (disque porteur 15 + couronne tranchante 16) qui écarte les fils de palissage, qui ne sont pas coupés.

Sur les figures 4, 5, 6, 7, 8, 9, 10 et 11, on voit que le disque porteur 15 comporte un épaulement circulaire 18 qui permet de placer avec exactitude les éléments tranchants 16 en amenant leur paroi arrière, courbe, contre l'épaulement 18.

Les éléments tranchants de la couronne 16 sont fixés par des vis 13 et des écrous 14 de sorte que leur montage/démontage est très aisé.

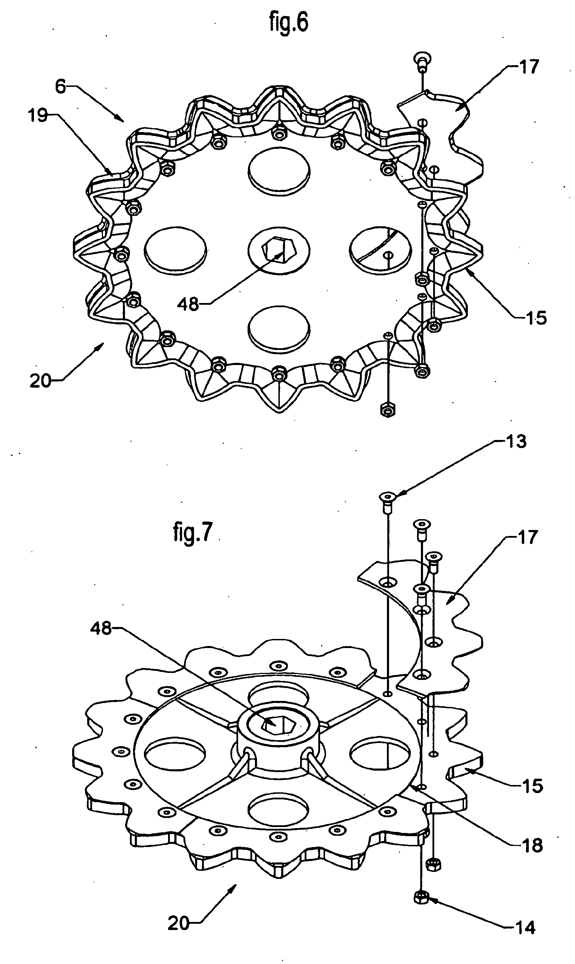

Aux figures 6 et 7, qui illustrent une variante de réalisation, on voit que les dents 17 des éléments tranchants sont un peu plus grandes que les dents du disque porteur 15 ; de sorte que les flancs (45) des dents (43) et l'espace (49) séparant deux dents (43) débordent légèrement (environ 1 à 5 mm).

Cette partie débordante peut être laissée à bords francs ou être aiguisée pour s'adapter à la végétation lorsque les bords sont francs ils sont parallèles à l'axe 7.

Selon une variante de réalisation, les outils de coupe 15-17 peuvent être placés à l'extrémité inférieure des empilages A et B, les autres outils de coupe 15-16 correspondant aux figures 4 et 5.

Il est possible de réaliser les empilages A et B avec uniquement des organes de coupe 15-16 ; ou bien uniquement des organes de coupe 15-17 ; ou encore en les alternants.

Les figures 10 et 11 représentent le disque porteur 15, qui est de préférence en alliage d'aluminium de façon à être léger.

Il comporte un moyeu 47 traversé par un alésage 48, sa denture 43 ayant, comme dit précédemment, un profil analogue à celui d'un engrenage. Le rebord circulaire est parallèle à l'axe de rotation 41. La face supérieure comporte un épaulement 18 permettant un placement précis des éléments de la couronne tranchante 16/17.

Le profil présente l'avantage de combiner une certaine agressivité juste nécessaire pour assurer une bonne saisie de la végétation, l'écartement 49 entre les dents 43 permettant aux sarments de pénétrer entre les dents, le tout en ne causant aucun dommage aux poteaux, fils et tendeurs.

En se reportant aux figures 1, 2, 3, 8 et 9, on voit que selon une caractéristique très importante de la présente invention, les organes de coupe 15-16 (ou 15-17) des empilages A et B sont en position inversée, les couronnes tranchantes 16 (ou 17) de l'empilage B étant au dessus tandis que ceux de l'empilage A sont en dessous

De préférence l'empilage B est placé à côté du tracteur, les disques dudit empilage étant positionnés au-dessus de ceux de l'empilage A. Grâce à cette disposition et le sens de rotation des disques de l'empilage B, les morceaux de sarments coupés sont évacués vers le côté extérieur du tracteur.

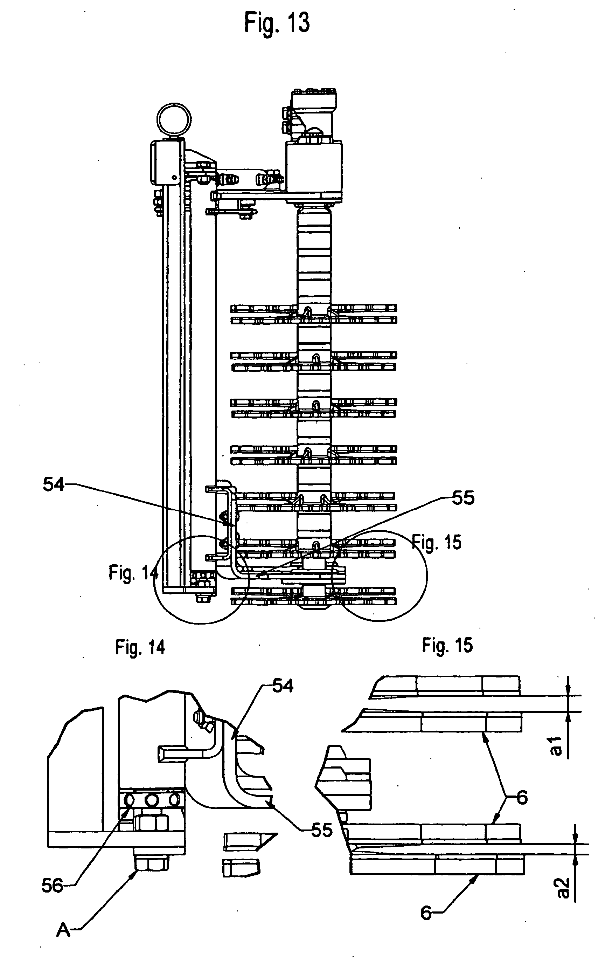

Un dispositif de réglage axial d'un des deux ensembles de coupe, représenté aux figures 13 et 14 permet de diminuer ou d'augmenter l'espace entre les outils de coupe, faisant face à l'autre ensemble de coupe.

On remarquera que l'écartement entre la paire de disques porteurs du bas est moindre que celui des autres disques au-dessus (fig. 13 et 14). Cette disposition permet d'obtenir une coupe nette du courson par la paire de disques du bas, alors que les bois coupés par les disques situés au-dessus sont plus ou moins éclatés ce qui favorise une décomposition plus rapide au sol. L'écart entre la paire de disques inférieurs a2 et celui entre les disques supérieurs a1 est d'environ 5 mm (Fig. 15).

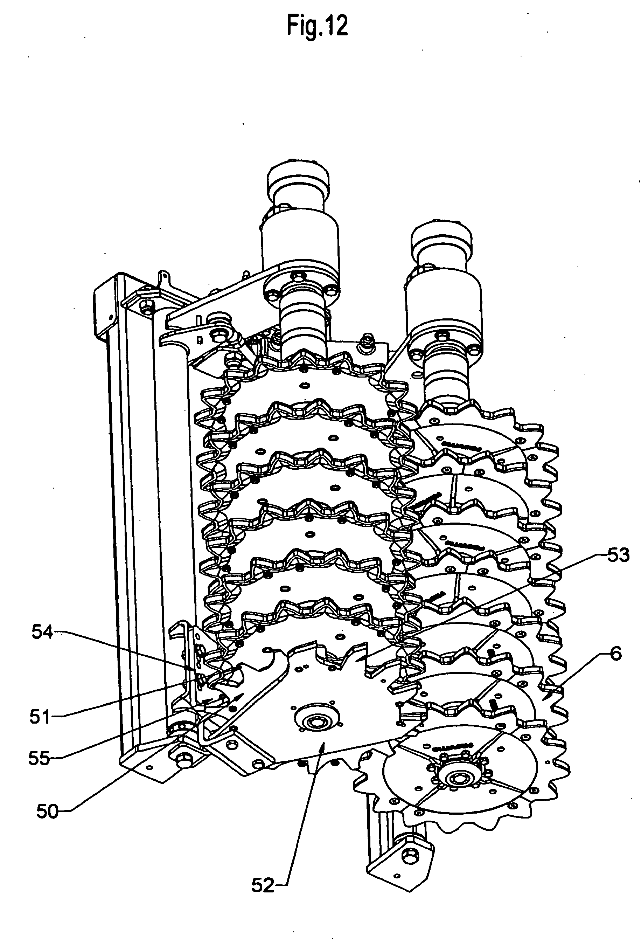

Les figures 12 à 15 illustrent une variante selon laquelle chaque empilage A et B est porté par un support 54, dont la position est réglable en hauteur par une vis 56.

La branche horizontale 55 de ce support 54 est disposée entre l'avant-dernier et le dernier ensemble de coupe 6 et porte le roulement correspondant.

Ceci a pour effet qu'il n'y a pas d'organe métallique qui fasse saillie au-dessous des empilages A et B et cela évite de casser des coursons.

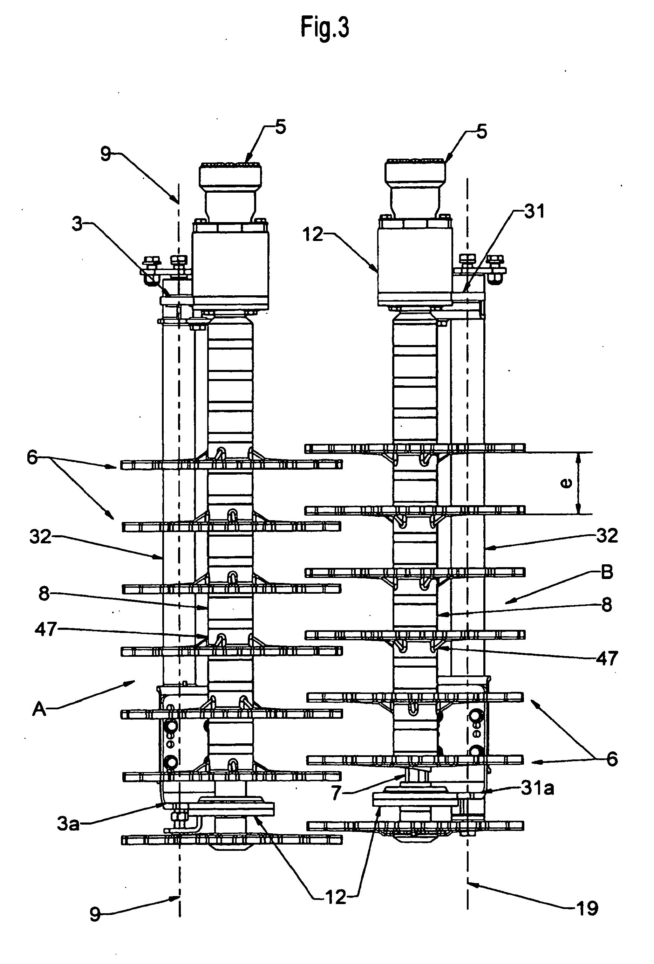

En se rapportant plus particulièrement à la figure 3, on désigne par la référence 6 chaque organe de coupe, composé de l'assemblage d'un disque porteur 15 et d'une couronne tranchante 16 ou 17, lesdits organes de coupe 6 sont enfilés, par leurs alésages 48, sur un arbre 7, chaque arbre 7 étant pris entre deux paliers 12 et entraîné par un moteur 5, qui peut être hydraulique ou électrique. Les bras 3/3a et 31/31a sont portés par des tubes 32 d'axe 9.

Les arbres 7 et les organes de coupe 6 sont solidarisés en rotation, par exemple du fait que les arbres 7 sont hexagonaux, ainsi que les alésages 48.

Cette disposition permet de faire coulisser les organes de coupe 6 le long des arbres 7 pour les écarter, les rapprocher ou encore en augmenter ou en diminuer le nombre.

Des entretoises 8 sont disposées entre les moyeux 47, de sorte que l'écartement « e » entre les organes de coupe 6 est déterminé à volonté par la dimension des entretoises 8.

Cet écartement « e » est compris entre 5 et 20 cm.

Dans l'exemple représenté, toutes les entretoises 8 ont la même dimension, mais on peut mettre en place les entretoises 8 de dimensions différentes de façon à adapter l'écartement « e » des organes de coupe à la configuration du palissage.

Les deux paliers12 des bras 3 et 31 sont agencés entre le premier et le deuxième disque porteur au bas de chaque module de sorte qu'aucune partie saillante sous lesdits disques ne gêne ou n'endommage les coursons lors du passage de la machine.

Ce montage permet également de remplacer le ou les deux disques (s) du bas par un autre concept de coupe sans démontage du ou des paliers inférieurs (s) 12 ni déréglage des autres éléments de coupe supérieurs 6.

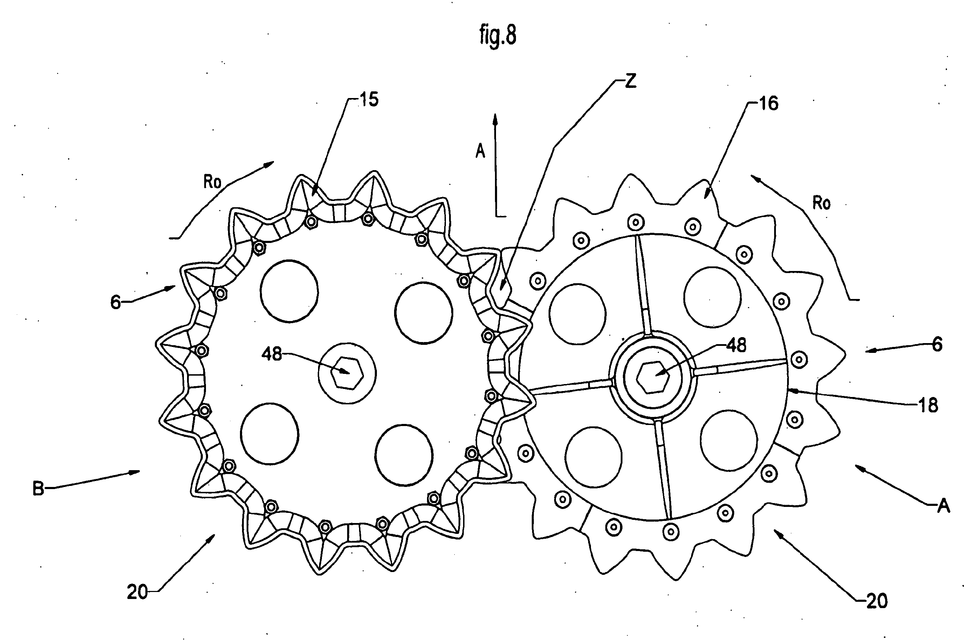

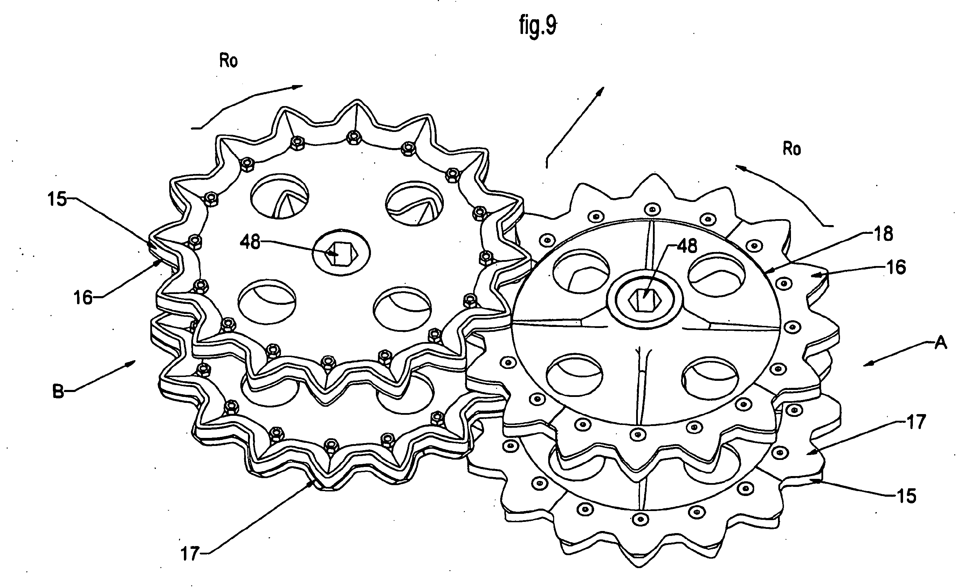

Comme on le voit sur les figures 8 et 9, l'interpénétration des ensembles A et B est telle que les sarments sont piégés dans la zone Z située entre deux dentures et ainsi maintenues fermement avant d'être sectionnés.

Les dispositions décrites ci-dessus permettent d'obtenir un excellent travail de coupe avec des vitesses de rotation des empilages A et B relativement faibles, c'est-à-dire comprises entre 200 et 300 t/m ce qui présente le double avantage d'éviter toutes projections et de nécessiter une faible puissance pour les moteurs 5 donc une économie d'énergie.

Selon une variante de réalisation, il est possible de ne pas munir de couronnes tranchantes certains disques porteurs 15 situés au sommet de chaque empilement A et B.

L'invention est également relative à une machine de coupe selon l'invention, dans laquelle la couronne dentée tranchante (16 ou 17) est d'une épaisseur minimum de 3 mm et est en acier à haute résistance.

L'invention est également relative à une machine selon l'invention dans laquelle la vitesse de rotation des empilages (A et B) est compris entre 200 et 850 t/m.

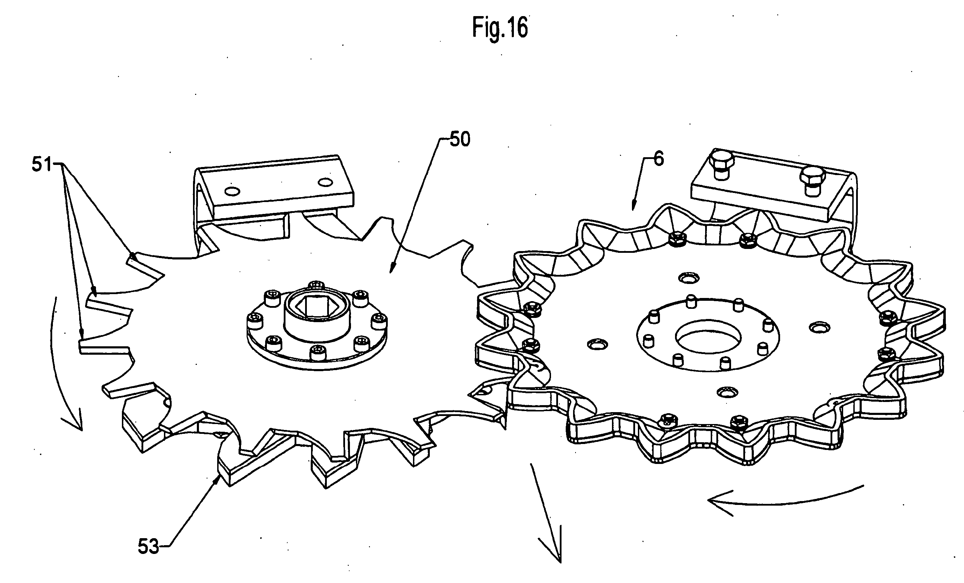

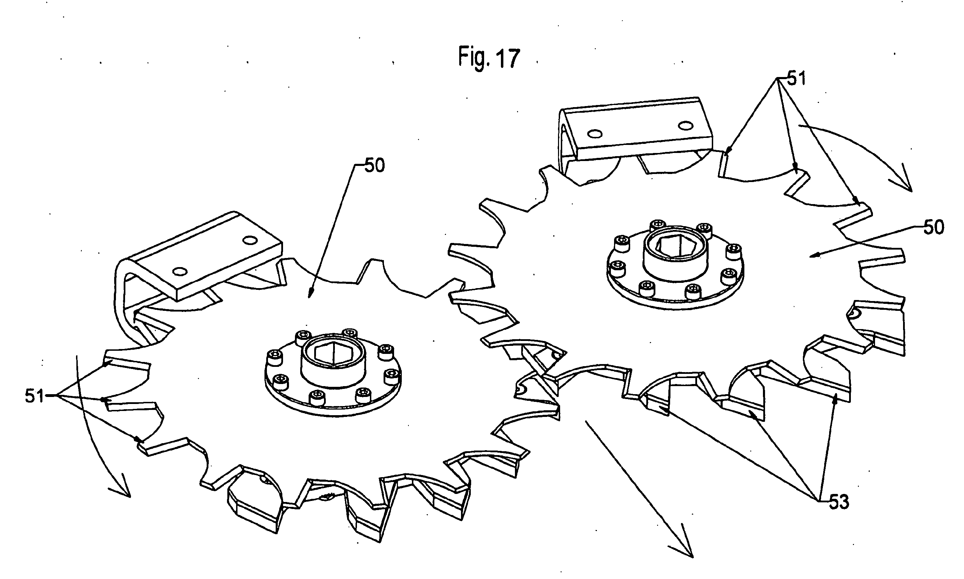

Les figures 12, 16 et 17 illustrent une variante de réalisation comportant un outil de coupe spécial additionnel, préférablement disposé au bas d'un seul ou des deux empilements.

La tendance actuelle est de ne pas faire une taille manuelle de finition, au moins une année sur deux afin de faire des économies, ou encore parce que la main-d'oeuvre sachant tailler la vigne se fait de plus en plus rare.

Comme on le voit sur ces figures on dispose, au bas de l'arbre à section hexagonale 7, un disque 50 dont la périphérie comporte une pluralité de couteaux 51 (16 dans l'exemple représenté). Le disque 50/51 constitue un couteau rotatif.

Le couteau rotatif 50/51 est associé à une plaque 52 munie de doigts 53 (5 dans l'exemple représenté). La plaque 52 est fixe de sorte que les couteaux mobiles 51 et les doigts fixes 53 fonctionnent de façon analogue à un sécateur, ce qui permet d'obtenir une coupe franche.

Les doigts 53, plus longs que les couteaux 51, canalisent les sarments et les maintiennent dans leur position lorsqu'ils sont coupés ce qui évite de casser les coursons.

Pour certains cépages dont les sarments à tailler sont d'une épaisseur relativement importante, on peut équiper chacun des deux ensembles de coupe A et B de l'outil additionnel représenté aux figures 12, 16 et 17.

Comme on le voit sur cette figure, l'ensemble couteau rotatif 50/51 et la plaque fixe à doigts 52/53 occupe deux positions inverses de façon que les couteaux rotatifs soient face à face.

Bien que cela ne soit pas représenté le ou les outils de coupe additionnels peuvent être entraînés par des moyens indépendants de ceux qui entraînent les autres outils de coupe.

## Revendications

1. Machine de coupe utilisable en agriculture, arboriculture et viticulture du type comportant deux ensembles de coupe (A, B) identiques constitués chacun par un empilage d'outils de coupe circulaires (6), ces deux ensembles (A et B) pouvant occuper une position de travail dans laquelle ils s'interpénètrent pour avoir un effet de cisaillement et une position écartée pour laisser un passage aux piquets (ou autres obstacles) **caractérisé par le fait que** chaque outil de coupe (6) est constitué par l'assemblage d'un disque porteur (15), à denture périphérique (43), ayant une épaisseur d'au moins 3 mm et portant à sa périphérie une couronne dentée tranchante (16-17) de profil correspondant ; ces outils de coupe (16) étant empilés de façon à constituer deux ensembles (A et B) en étant en position inverse d'un ensemble à l'autre, de telle façon que leurs couronnes tranchantes (16-17) soient face à face, lesdits ensembles (A et B) étant positionnés en hauteur l'un par rapport à l'autre de façon telle que l'écartement entre deux couronnes dentées tranchantes (16-17) soit réglable et compris entre 1 et 10 mm pour sectionner les sarments.

2. Machine de coupe selon la revendication 1 dans laquelle le disque porteur (15) est en alliage d'aluminium d'une épaisseur comprise entre 3 et 30 mm, de préférence de l'ordre de 15 mm.

3. Machine de coupe selon la revendication 1 dans laquelle la couronne dentée tranchante (16 ou 17) est d'une épaisseur minimum de 3 mm et est en acier à haute résistance.

4. Machine selon les revendications 1 à 3 dans laquelle le profil de la couronne dentée tranchante (16) correspond exactement à celui du disque porteur (15).

5. Machine selon les revendications 1 à 3 dans laquelle les rebords de la couronne dentée tranchante (17) débordent au-delà des flancs (45) des dents (43) et de l'espace (49) séparant deux dents (43) du disque porteur (15) de 1 à 6 mm.

6. Machine selon la revendication 5 dans laquelle les rebords débordants de la couronne tranchante (17) sont aiguisés.

7. Machine selon les revendications 1 et 4 à 6 dans laquelle les empilages (A et B) sont constitués d'outils de coupe identiques.

8. Machine selon les revendications 1 et 4 à 6 dans laquelle les empilages (A et B) sont constitués d'outils de coupe (15 et 16 ou 17) différents c'est-à-dire ayant des couronnes tranchantes avec ou sans rebords.

9. Machine selon la revendication 8 dans laquelle seuls les outils de coupe (6) du bas de chaque empilage ont des couronnes tranchantes (17) à rebords débordants et aiguisés.

10. Machine selon l'une quelconque des revendications précédentes dans laquelle la couronne dentée tranchante (16 ou 17) fixée sur le disque porteur (15) es en une seule pièce ou formée par deux ou plusieurs segments de cercle.

11. Machine selon l'une quelconque des revendications précédentes dans laquelle l'écartement « e » entre les organes de coupe (6) est réglable.

12. Machine selon la revendication 11 dans laquelle l'écartement « e » est le même sur toute la hauteur d'un empilage (A et B).

13. Machine selon la revendication 11 dans laquelle l'écartement « e » est variable.

14. Machine selon les revendications 11 à 13 dans laquelle des entretoises (8) sont disposées entre les organes de coupe (6) la dimension desdites entretoises déterminant la valeur de l'écartement « e ».

15. Machine selon l'une quelconque des revendications précédentes dans lesquelles les dents (43) ont un profil analogue à celui d'un engrenage et sont espacées les unes des autres d'un espacement (49).

16. Machine selon l'une quelconque des revendications précédentes dans lequel l'interpénétration des empilages (A et B) détermine une zone (Z) dans laquelle les sarments sont piégés et maintenus avant d'être sectionnés.

17. Machine selon l'une quelconque des revendications précédentes dans laquelle la vitesse de rotation des empilages (A et B) est compris entre 200 et 850 t/m.

18. Machine selon l'une quelconque des revendications précédentes dans laquelle le disque porteur (15) comporte un nombre de dents compris entre 14 et 20, de préférence 16.

19. Machine selon l'une quelconque des revendications précédentes dans laquelle l'empilage (B) est positionné à côté du tracteur, les disques dudit empilage étant positionnés au-dessus des disques de l'autre (A) ; le sens de rotation de l'empilage (B) étant choisi de façon que les morceaux de sarments coupés soient évacués vers le côté extérieur du tracteur.

20. Machine selon l'une quelconque des revendications 1 à 19 dans laquelle un dispositif de réglage axial d'un des deux empilages (A ou B) permet de diminuer ou d'augmenter l'espace entre les outils de coupe se faisant face.

21. Machine selon l'une quelconque des revendications 1 à 20 dans laquelle l'écartement entre la paire de disques porteur du bas est moindre que celui des disques situés au-dessus, afin d'obtenir une coupure franche du courson.

22. Machine selon l'une quelconque des revendications 1 à 21, dans laquelle les deux paliers (12) des bras (3 et 31) sont agencés entre le premier et le deuxième disque porteur au bras de chaque outil ; de sorte qu'aucune partie saillante ne gêne ou n'endommage les coursons.

23. Machine selon l'une quelconque des revendications 1 à 22 comportant un outil de coupe spécial, additionnel disposé au bas de chaque empilement ou d'un seul.

24. Machine selon la revendication 23, dans laquelle l'outil additionnel est constitué d'un couteau rotatif (50/51) associés à un plateau fixe à doigts (52/53); les couteaux mobiles (51) coopérant avec les doigts fixes (53) à la façon d'un sécateur.

25. Machine selon la revendication 24, dans laquelle les doigts (53) sont plus longs que les couteaux (51).

26. Machine selon les revendications 23 à 25 dans laquelle le, ou les, outils additionnels peuvent être entraînés par des moyens indépendants.

## Claims

1. Cutting machine usable in agriculture, arboriculture and viticulture, of the type comprising two identical cutting sets (A, B) made up each of a stack of circular cutting tools (6), these two sets (A and B) can be placed in a working position in which they interpenetrate in order to have a shearing effect and in a spread position in order to provide a passage for the posts (or other obstacles), **characterized in that** each cutting tool (6) is made up of the assembly of a carrier disk (15) with peripheral teeth (43) having a thickness of at least 3 mm and carrying on its periphery a sharp toothed crown (16-17) with a matching profile; these cutting tools (16) are stacked in order to form two sets (A and B) and are arranged in reversed positions from one set to the other, so that their sharp crowns (16-17) are positioned opposite to each other, said sets (A and B) being positioned in height with respect to each other so that the gap between two sharp toothed crowns (16-17) is adjustable and comprised between 1 and 10 mm for cutting the shoots.

2. Cutting machine according to claim 1, in which the carrier disk (15) is out of aluminum alloy with a thickness comprised between 3 and 30 mm, preferably of 15 mm.

3. Cutting machine according to claim 1, in which the sharp toothed crown (16 or 17) has a minimum thickness of 3 mm and is out of high-tensile steel.

4. Machine according to claims 1 to 3, in which the profile of the sharp toothed crown (16) matches exactly that of the carrier disk (15).

5. Machine according to claims 1 to 3, in which the edges of the sharp toothed crown (17) protrude by 1 to 6 mm from the flanks (45) of the teeth (43) and from the gap (49) between two teeth (43) of the carrier disk (15).

6. Machine according to claim 5, in which the protruding edges of the sharp toothed crown (17) are ground.

7. Machine according to claims 1 and 4 to 6, in which the stacks (A and B) are made of identical cutting tools.

8. Machine according to claims 1 and 4 to 6, in which the stacks (A and B) are made of different cutting tools (15 and 16 or 17), that is to say having sharp crowns with or without edges.

9. Machine according to claim 8, in which only the cutting tools (6) at the bottom of each stack have sharp crowns (17) with protruding and ground edges.

10. Machine according to any of the previous claims, in which the sharp toothed crown (16 or 17) fastened to the carrier disk (15) is out of one single part or made up of two or several segments of a circle.

11. Machine according to any of the previous claims, in which the gap "e" between the cutting subsets (6) is adjustable.

12. Machine according to claim 11, in which the gap "e" is the same on the whole height of a stack (A and B).

13. Machine according to claim 11, in which the gap "e" is variable.

14. Machine according to claims 11 to 13, in which spacers (8) are arranged between the cutting subsets (6), the dimension of said spacers determines the value of gap "e".

15. Machine according to any of the previous claims, in which the teeth (43) have a profile similar to that of a gear and are spaced from each other by a gap (49).

16. Machine according to any of the previous claims, in which the interpenetration of the stacks (A and B) determines an area (Z) in which the shoots are trapped and maintained before they are cut off.

17. Machine according to any of the previous claims, in which the rotational speed of the stacks (A and B) is comprised between 200 and 850 RPM.

18. Machine according to any of the previous claims, in which the carrier disk (15) has a number of teeth between 14 and 20, preferably 16.

19. Machine according to any of the previous claims, in which the stack (B) is located preferably beside the tractor, the disks of said stack being positioned above the disks of the other stack (A); the direction of rotation of stack (B) is chosen so that the cut-off shoot pieces are evacuated towards the outside of the tractor.

20. Machine according to any of claims 1 to 19, in which an axial adjusting device of one of both stacks (A or B) allows to reduce or increase the gap between the cutting tools located opposite to each other.

21. Machine according to any of claims 1 to 20, in which the gap between the bottom pair of carrier disks is smaller than that of the disks located above, so as to achieve a clean cut of the spur.

22. Machine according to any of claims 1 to 21, in which the two bearings (12) of arms (3 and 31) are arranged between the first and the second carrier disk at the bottom of each tool, so that no protruding element affects or damages the spurs.

23. Machine according to any of claims 1 to 22, comprising an additional special cutting tool arranged at the bottom of each or of only one stack.

24. Machine according to claim 23, in which the additional tool is made up of a rotary knife (50/51) associated with a fixed finger plate (52/53), the mobile knives (51) cooperating with the fixed fingers (53) in a way similar to pruning shears.

25. Machine according to claim 24, in which the fingers (53) are longer than the knives (51).

26. Machine according to claims 23 to 25, in which the additional tool(s) can be driven by independent means.

## Patentansprüche

1. In der Landwirtschaft, in der Baumzucht und in dem Weinbau verwendbare Schneidmaschine des Typs bestehend aus zwei identischen Schneid-Einheiten (A, B), die jeweils aus einer Aufstapelung von kreisförmigen Schneid-Werkzeugen (6) bestehen, wobei diese Einheiten (A und B) eine Arbeitsstellung, in der sie gegenseitig ineinander dringen um ein Abscherungs-Effekt zu haben, sowie eine entfernte Stellung, um den Pfählen (oder anderen Hindernissen) einen Durchgang frei zu machen, einnehmen können, **dadurch gekennzeichnet, dass** jedes Schneidwerkzeug (6) aus dem Zusammenbau einer Tragscheibe (15) mit einer Umfangs-Verzahnung (43) und einer Dicke von mindestens 3 mm besteht, die auf ihrem Umfang einen schneidenden Zahnkranz (16-17) mit einem entsprechenden Profil trägt, wobei diese Schneidwerkzeuge (16) aufeinander aufgestapelt sind, um zwei Einheiten (A und B) zu bilden, und von einer Einheit zur anderen in entgegen gerichteter Stellung angeordnet sind, so dass ihre schneidenden Kränze (16-17) gegenüber liegen, wobei die besagten Einheiten (A und B) in der Höhe so zueinander positioniert sind, dass der Abstand zwischen zwei schneidenden Zahnkränzen (16-17) verstellbar ist und um die Ruten zu schneiden zwischen 1 und 10 mm liegt.

2. Schneidmaschine nach Anspruch 1, bei der die Tragscheibe (15) aus einer Aluminium-Legierung mit einer Dicke zwischen 3 und 30 mm, vorzugsweise 15 mm, besteht.

3. Schneidmaschine nach Anspruch 1, bei der der schneidende Zahnkranz (16 oder 17) eine Mindestdicke von 3 mm aufweist und aus hochfestem Stahl besteht.

4. Maschine nach Ansprüchen 1 bis 3, bei der das Profil des schneidenden Zahnkranzes (16) genau dem der Tragscheibe (15) entspricht.

5. Maschine nach Ansprüchen 1 bis 3, bei der die Ränder des schneidenden Zahnkranzes (17) um 1 bis 6 mm über die Flanken (45) der Zähne (43) und über den Freiraum (49) zwischen zwei Zähnen (43) der Tragscheibe (15) herausragen.

6. Maschine nach Anspruch 5, bei der die herausragenden Ränder des schneidenden Zahnkranzes (17) scharf geschliffen sind.

7. Maschine nach Ansprüchen 1 und 4 bis 6, bei der die Aufstapelungen (A und B) aus identischen Schneid-Werkzeugen bestehen.

8. Maschine nach Ansprüchen 1 und 4 bis 6, bei der die Aufstapelungen (A und B) aus unterschiedlichen Schneid-Werkzeugen (15 und 16 oder 17), d. h. mit schneidenden Kränzen mit oder ohne Rand, bestehen.

9. Maschine nach Anspruch 8, bei der nur die Schneid-Werkzeuge (6) am unteren Ende jeder Aufstapelung schneidende Zahnkränze (17) mit herausragenden und scharf geschliffenen Rändern aufweisen.

10. Maschine nach einem beliebigen der vorhergehenden Ansprüche, bei der der auf der Tragscheibe (15) befestigte schneidende Zahnkranz (16 oder 17) einteilig ist oder aus zwei oder mehreren Kreis-Segmenten besteht.

11. Maschine nach einem beliebigen der vorhergehenden Ansprüche, bei der der Abstand "e" zwischen den Schneid-Organen (6) verstellbar ist.

12. Maschine nach Anspruch 11, bei der der Abstand "e" auf der ganzen Höhe einer Aufstapelung (A und B) der selbe ist.

13. Maschine nach Anspruch 11, bei der der Abstand "e" variabel ist.

14. Maschine nach Ansprüchen 11 bis 13, bei der Abstandhalter (8) zwischen den Schneid-Organen (6) angeordnet sind, wobei die Abmessung der besagten Abstandhalter den Wert von Abstand "e" bestimmt..

15. Maschine nach einem beliebigen der vorhergehenden Ansprüche, bei der die Zähne (43) ein einem Getriebe ähnliches Profil haben und zwischen sich einen Freiraum (49) aufweisen.

16. Maschine nach einem beliebigen der vorhergehenden Ansprüche, bei der das Ineinanderdringen der Aufstapelungen (A und B) einen Bereich (Z) bestimmt, in dem die Ruten eingefangen und festgehalten werden, bevor sie abgeschnitten werden.

17. Maschine nach einem beliebigen der vorhergehenden Ansprüche, bei der die Drehzahl der Aufstapelungen (A und B) zwischen 200 und 850 U/Min. liegt.

18. Maschine nach einem beliebigen der vorhergehenden Ansprüche, bei der die Tragscheibe (15) eine Anzahl Zähne zwischen 14 und 20, vorzugsweise 16, beträgt.

19. Maschine nach einem beliebigen der vorhergehenden Ansprüche, bei der die Aufstapelung (B) neben dem Traktor angeordnet ist, wobei die Scheiben der besagten Aufstapelung über den Scheiben der anderen Aufstapelung (A) angeordnet sind, wobei die Drehrichtung der Aufstapelung (B) so gewählt wird, dass die abgeschnittenen Rutenstücke in Richtung der Außenseite des Traktors ausgeworfen werden.

20. Maschine nach einem beliebigen der Ansprüche 1 bis 19, bei der eine axiale Verstell-Vorrichtung einer der beiden Aufstapelungen (A oder B) erlaubt, den Abstand zwischen den gegenüberliegenden Schneid-Werkzeugen zu reduzieren oder zu vergrößern.

21. Maschine nach einem beliebigen der Ansprüche 1 bis 20, bei der der Abstand zwischen dem unteren Paar Tragscheiben kleiner ist als der zwischen den darüberliegenden Scheiben, um einen saubereren Schnitt der Rebzapfen zu erhalten.

22. Maschine nach einem beliebigen der Ansprüche 1 bis 21, bei der die beiden Lager (12) der Arme (3 und 31) zwischen der ersten und der zweiten Tragscheibe, unten an jedem Werkzeug angeordnet sind, so dass kein herausragender Teil die Rebzapfen beeinträchtigt oder beschädigt.

23. Maschine nach einem beliebigen der Ansprüche 1 bis 22, die ein zusätzliches Sonder-Schneidwerkzeug beträgt, das unten an beiden oder an einer einzigen Aufstapelung abgeordnet ist.

24. Maschine nach Anspruch 23, bei der das zusätzliche Werkzeug aus einem rotierenden Messer (50/51) und einer feststehenden Platte mit Fingern (52/53) besteht, wobei die beweglichen Messer (51) wie eine Rebenschere mit den feststehenden Fingern (53) zusammenwirken.

25. Maschine nach Anspruch 24, bei der die Finger (53) länger sind, als die Messer (51).

26. Maschine nach Ansprüchen 23 bis 25, bei der das oder die zusätzlichen Werkzeuge durch unabhängige Mittel angetrieben werden können.
